# EUROPEAN PATENT APPLICATION

(11) **EP 0 648 065 A2**
(43) Date of publication of application: **12.04.1995**
(21) Application number: 94500135.2
(22) Date of filing: 26.07.1994
(51) Int. Cl.: H05B 6/64, A47J 43/18, H05B 6/80

(54) **Food products support applicable to roast in microwave ovens**

(30) Priority: 27.07.1993 ES 9302113
(71) Applicant: PLASTICOS DE GALICIA, S.A., E-36210 Vigo (Pontevedra) (ES)
(72) Inventor: Villar Otero,Domingo, E-36210 Vigo (ES)
(74) Representative: De la Fuente Fernandez, Dionisio

(57) **Abstract**

A food products support applicable to roast in microwave ovens, specially used for roasting potatoes and foods of similar size in microwave ovens, characterized in that it is constituted starting from a body (2) made of a resistant and rigid plastic material having a general configuration of a solid cylinder, which has, on its lower side, a perimetric oversize (9), and then a perceptible narrowing, destined to be incorporated, through a center circular perforation, to a part (4) having a straight configuration on its center portion and angular on its sidways emerging ends, being affixed to the rod (2) by means of a second part (5) with an identical shape, and having, on its center portion, a hollow cylindrical bed inserted into the emerging rod of the part (2), the parts (4) and (5) being retained in the oversize (9), and allowing for the side hinge and motion of same in their hinge point.

## Description

### BACKGROUND OF THE INVENTION

The present specification refers to an Utility Model referring to a food products support applicable to roast in microwave ovens, the evident purpose of which is to constitute a supporting element for certain food products, such as potatoes or other foodstuffs of similar size in solid state, which are placed on spikes emerging from a lower hinged surface, for subjecting same to the action of a microwave oven, and the support is taken out through a lower part, and the roasted products are served directly.

### FIELD OF THE INVENTION

This invention applies to the industry devoted to the manufacture of household utensils and kitchen equipment.

### SUMMARY OF THE INVENTION

The food products support applicable to roast in microwave ovens as proposed by the invention constitutes per se an evident solution of the present problems in this matter, since starting of same it is possible, in a total and absolute way, to roast potatoes and similar food products, or different products with a similar size, in an oven, these foodstuffs maintaining always their particular - properties, and being it possible that the product be perfectly roasted at all its sides, obviating in a specific manner the existence of portions not roasted upon depositing the product on dishes or trays as it was the case up till now.

In a more specific manner, the food products support applicable to roast in microwave ovens is determined starting from two parts made of a rigid plastic material, these two parts being joined one other by means of a hinge formed on the lower part, and supported by a third part consisting of a vertically emerging rod acting as a bonding element of the two parts supporting the foods and, at the same time, as a grasping handle.

The hinged parts, horizontally placed and adopting an angular shape at its ends and practically straight on its middle portion, have a series of perforations made on its surface, these perforations receiving parts emerging through the upper side and having a sharp-pointed configuration, while on the lower side these parts adopt a blunt configuration and act as a base or support for the assembly

The foods are driven in the emerging sharp-pointed elements, the whole being deposited within a microwave oven, specifically on an acting tray, the parts emerging from the lower part acting as legs or feet.

Once the cooking or roasting of the products has been carried out, the whole is taken from the oven and grasped by the upper portion of the emerging rod which acts as a handle, and deposited on the table where the lunch is to be carried out, serving, at the same time, as table element or utensil.

### BRIEF DESCRIPTION OF THE DRAWINGS

In order to complement this description and aid to a better understanding of the features of the invention, the accompanying drawings, which are a part of this specification, show in an illustrative but non limitative sense, the following:
Figure 1 is a view in perspective in acting position of the food products support applicable to roast in microwave ovens, of the invention.
Figure 2 is a view in perspective in folding position of the object shown in Fig. 1, this being the position to be adapted by the object of the invention to be stored, so occupying a substantially reduced space as compared with the space occupied when in acting position.

### DETAILED DESCRIPTION OF THE PREFERRED EMBODIMENT

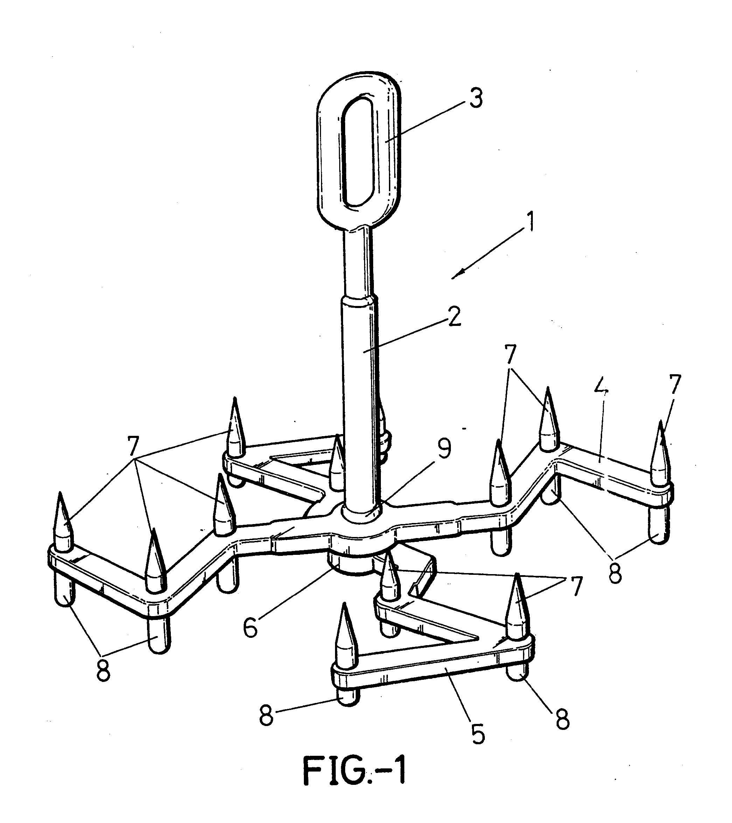

From these figures, and specifically from Fig. 1, it can be seen that the food products support applicable to roast in microwaves ovens is constituted starting from an emerging rod (2) acting as fastening and pivoting element of two complementary parts and with a similar shape (4) and (5), which are fixed to the rod (2) at its lower part, an oversized perimetric portion at a fixed height (9) impeding any movement, both parts being coupled at their lower side.

The fastening rod of parts (4) and (5) has, on the lower side, a light narrowing from which emerges a grasping handle (3), serving for handling the support in all its functions.

As already mentioned, the parts (4) and (5) are hinged to the rod (2), and have, on their upper surface and located in each of their ends, sharp-pointed protuberances (7), which project at their lower part in cylindrical projections adopting a blunt configuration (8), acting a legs or supporting elements for the food products support (1).

The parts (4) and (5) carrying the sharp-pointed protuberances (7) where the foods are driven in to be roasted, are hinged in a point referenced as (6).

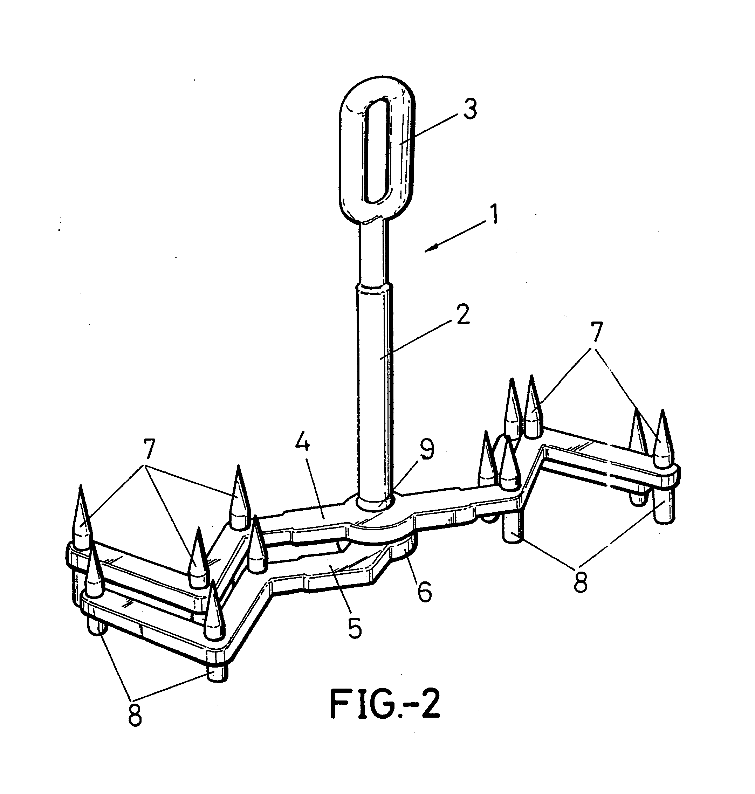

In Fig. 2, it can be seen as the food products support can reduce its dimensions, by means of the hinge formed in point (6) acting of the parts (4) and (5).

So, the food products support (1) fold its side projections (4) and (5), and, consequently, the space occupied is essentially lesser, which facilitates a simplified storage.

It is not considered necessary to extend more this description for an expert in the art to understand the scope of the invention and the advantages derived from it.

The materials, shape, size and arrangement of the components are open to variation, provided that it does not imply any alteration to the essence of the invention.

The terms under which this specification has been described should be always taken in an ample and non limitative sense.

## Claims

1.- Afood products support applicable to roast in microwave ovens, specially used for roasting potatoes and foods of similar size in microwave ovens, characterized in that it is constituted starting from a body (2) made of a resistant and rigid plastic material having a general configuration of a solid cylinder, which has, on its lower side, a perimetric oversize (9), and then a perceptible narrowing, destined to be incorporated, through a center circular perforation, to a part (4) having a straight configuration on its center portion and angular on its sidways emerging ends, being affixed to the rod (2) by means of a second - part (5) with an identical shape, and having, on its center portion, a hollow cylindrical bed inserted into the emerging rod of the part (2), the parts (4) and (5) being retained in the over-size (9), and allowing for the side hinge and motion of same in their hinge point.

2.- Afood products support applicable to roast in microwave ovens, according claim 1, characterized in that the parts (4) and (5), made of a resistant and rigid plastic material as the part (2), have, on their emerging ends on the upper portion, several sharp-pointed protuberances (7), while, on the lower part, the cylindrical protuberances (7) emerge as supporting points (8), being fitted with a blunt configuration on their lower portion.

3.- Afood products support applicable to roast in microwave ovens, according to the preceding claims, characterized in that the vertical cylindrical element (2) has, on its upper portion, a stepping reducing next markedly its size, and having, on the upper portion a cylindrical shaped handle adopting an oblong configuration having an opening at its center portion.
